# EUROPÄISCHE PATENTSCHRIFT

(11) **EP 3 223 985 B1**
(45) Veröffentlichungstag und Bekanntmachung des Hinweises auf die Patenterteilung: **07.10.2020**
(21) Anmeldenummer: 15801750.9
(22) Anmeldetag: 24.11.2015
(51) Int. Cl.: B23D 59/00, B23D 45/12, B23Q 17/20, G01B 21/10, G01B 21/08, G01B 7/06

(54) **VERMESSUNG VON MATERIALABMESSUNGEN**
MEASUREMENT OF MATERIAL DIMENSIONS
MESURAGE DE DIMENSIONS DE MATIÈRE

(30) Priorität: 25.11.2014 DE 102014117255
(43) Veröffentlichungstag der Anmeldung: 04.10.2017
(73) Patentinhaber: Rattunde AG, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2015/077551
(87) Internationale Veröffentlichungsnummer: WO 2016/083406

(56) Entgegenhaltungen:
- EP-A1- 1 072 861
- DE-A1- 2 934 389
- DE-A1- 10 253 350
- DE-A1-102013 202 754
- GB-A- 1 078 505
- JP-A- S54 114 263
- US-A- 5 043 907

## Beschreibung

Die Erfindung betrifft ein Verfahren gemäß dem Oberbegriff des Anspruchs 1 zur Bestimmung von Materialabmessungen eines Langprofils während eines Sägevorganges, indem eine Sägescheibe vorgeschoben wird, ein Langprofil währenddessen von der Sägescheibe entlang einer Sägenut zerspant wird, Vorschubpositionsdaten der Sägescheibe entlang des Vorschubweges ermittelt werden, während des Sägens weitere Messdaten aus der Gruppe Sägekraft oder einer anderen mit der Sägekraft korrespondierenden Größe ermittelt werden. Ein derartiges Verfahren ist aus dem Dokument DE 10 2013202 754 A1 bekannt.

Im Stand der Technik sind Rohrschneidemaschinen hinlänglich bekannt. Aufgrund zunehmender Anforderungen an die Genauigkeit der Maße der abgelängten Rohrabschnitte werden diese einer Nachprüfung unterzogen Die abgelängten Rohrabschnitte werden einer Nachprüfung hinsichtlich der Länge beispielsweise durch die Rohrschneidemaschine der DE 10 2005 025 606 oder hinsichtlich der Form der Profils des Rohrrandes durch eine Vorrichtung der DE 10 2006 019 354 unterzogen.

In der DE 10 2013 202 754 A1 ist eine Vorrichtung zum Trennen eines Werkstückes entlang einer Trennlinie offenbart. Dabei wird der Bearbeitungsprozess für den Bediener vereinfacht, indem von einer Sensoreinrichtung auf Grundlage der Messgrößen ein aktuelles Bearbeitungsergebniss berechnet wird und das aktuelle Bearbeitungsergebnis auf einer Anzeigeeinrichtung dargestellt wird.

Nachteilig an der genannten Rohrschneidemaschine ist, dass eine Kontrolle der Abmessungen des eingelegten Rohres in die Rohrschneidemaschine, insbesondere dessen Durchmesser und dessen Wandstärke, nur sehr aufwendig möglich ist. Insbesondere können verschiedene Typen abzulängender Rohre in ihrem Durchmesser und ihrer Wandstärke teilweise sehr dicht beieinander sein, d. h. die Differenz verschiedener Rohrdurchmesser könnte wenige 1/10 Millimeter betragen, und auch die Wandstärken könnten bei verschiedenen Rohrtypen nur um wenige 1/10 Millimeter voneinander abweichen, so dass diese mit bloßem Auge nicht voneinander zu unterscheiden sind. Das ist vor allem problematisch bei irrtümlich falsch gekennzeichneten Rohren. Ein Fehler in der Wahl des oder eine Vermischung von Rohrtypen oder gleiche Rohrabmessungen mit anderem Werkstoff lassen sich manchmal gar nicht erkennen.

In der DE 2934389 A1 ist ein Verfahren zur Optimierung eines Sägevorganges beim Trennen eines Rohres offenbart. Dabei werden Sägeblätter verwendet und das Rohr von gegenüberliegenden Seiten bis zu einer jeweiligen Eingriffslänge getrennt, wobei anschließend die beiden Sägeblätter verschwenkt werden, um das Rohr vollständig durchzutrennen. Dadurch ist es möglich, Sägeblätter mit geringerem Durchmesser zu verwenden.

In der EP 1 027 861 A1 ist ein Verfahren zur Messung der Wanddicke eines Rohres bekannt.

In der US 1,078,505 ist eine mechanische Säge beschrieben, die eine Messvorrichtung aufweist, die es ermöglicht, die Länge der Schnittlinie der Säge zu bestimmen und die Kraft, mit der die Säge angedrückt wird, dementsprechend zu variieren.

Es ist daher Aufgabe der vorliegenden Erfindung, ein Verfahren zur Verfügung zu stellen, das es ermöglicht, auch noch während des Sägevorganges Materialabmessungen zu prüfen.

Die Aufgabe wird durch ein eingangs genanntes Verfahren gelöst, das die kennzeichnenden Merkmale des Anspruchs 1 aufweist. Unter Langprofilen werden Vollprofile verstanden, aber auch Rohre, insbesondere jedoch Metallprofile.

Erfindungsgemäß wird aus den bei gesteuerten Rohschneidemaschinen zur Verfügung stehenden Vorschubpositionsdaten, d. h. den Ortskoordinaten der Sägescheibenwelle der Sägescheibe und weiteren Messdaten ein Istprofil ermittelt.

Bei den weiteren Messdaten handelt es sich vorzugsweise um die Sägekraft oder eine andere mit der Sägekraft korrespondierenden Größe, insbesondere das Drehmoment. Das Istprofil, stellt beispielsweise den Verlauf der Sägekraft in Abhängigkeit vom Vorschubweg da.

Vorzugsweise wird durch Vergleich des Istprofils mit einem Sollprofil unter Berücksichtigung einer zulässigen vorgegebenen Toleranz ein Fehler in den Materialabmessungen entdeckt, oder es werden durch Auswertung des Istprofils Materialabmessungen direkt ermittelt, vorzugsweise unabhängig von der abnehmenden Höhe bzw. Durchmesser der Sägescheibe durch Verschleiß.

Insbesondere handelt es sich bei den Langprofilabschnitten um Rohrabschnitte, insbesondere Rohrabschnitte von Metallrohren, und bei den Materialabmessungen um den Durchmesser und die Wandstärke des Rohrabschnitts.

Vorzugsweise handelt es sich bei der Sägescheibe um eine kreisförmige Sägescheibe, das rotiert wird, und es werden entlang des Vorschubweges der Sägescheibe Vorschubpositionsdaten einer Sägescheibenwelle gemessen. Dabei werden vorzugsweise die Ortskoordinaten der Sägescheibenwelle zu verschiedenen, kurz aufeinanderfolgenden Messzeitpunkten ermittelt. Diese stehen bei den üblicherweise verwendeten gesteuerten Rohrschneidemaschinen ohnehin oder in einfach zu ermittelnder Weise zur Verfügung. Insbesondere werden die Ortskoordinaten der Sägescheibenwelle in Bezug auf eine Aufnahme des Langprofilabschnittes, insbesondere im Verhältnis zur unteren Auflagefläche der Aufnahme bestimmt.

Günstigerweise werden aus dem Istprofil Extremalwerte bestimmt, und aus den Vorschubpositionsdaten der Extremalwerte werden die Materialabmessungen ermittelt.

Es hat sich gezeigt, dass sich durch das Istprofil des Sägevorganges, beispielsweise eines Rohres, zunächst in einfacher Weise die Vorschubpositionsdaten des Beginns des Zerspanvorgangs wie auch die des Endes des Zerspanvorgangs ermitteln lassen. Der Beginn des Zerspanvorganges korrespondiert mit dem Anstieg des weiteren Messwertes, insbesondere der Sägekraft vom Nullwert, während das Ende des Zerspanvorganges mit dem Abfallen des weiteren Messwertes auf den Nullwert korrespondiert. Aus der Differenz der beiden Vorschubpositionsdaten lässt sich ein Durchmesser des Langprofils bestimmen.
Als Zerspanvorgang wird der Teil des Sägevorganges zwischen dem ersten Eindringen eines der Sägezähne in das Langprofils und dem Durchtrennen des Langprofils bezeichnet.

In einer besonders bevorzugten Ausführungsform der Erfindung können aus der Differenz der Vorschubpositionsdaten zweier benachbarter Maximalwerte Materialabmessungen des Langprofils bestimmt werden.

Günstigerweise wird eine Wandstärke des Langprofils, insbesondere eines Rohres, aus der Differenz der Vorschubpositionsdaten des Beginns der Zerspanung und den Vorschubpositionsdaten eines ersten Maximalwertes und/oder aus der Differenz der Vorschubpositionsdaten des Endes der Zerspanung und den Vorschubpositionsdaten eines zweiten Maximalwertes bestimmt.

Das erfindungsgemäße Verfahren eignet sich insbesondere zur Anwendung auf rohrförmige Langprofilabschnitte mit einem kreisförmigen Innen- und einem kreisförmigen Außendurchmesser. Vorzugsweise sind die Langprofile, auf die das Verfahren angewendet wird, um eine Längsachse rotationssymmetrisch angeordnet.

In einer weiteren bevorzugten Ausführungsform der Erfindung werden die Vorschubpositionsdaten des Beginns der Zerspanung ermittelt, und daraus wird ein Sägescheibendurchmesser ermittelt.

In einer weiteren Ausführungsform der Erfindung wird aus den weiteren Messdaten, insbesondere der Sägekraft oder dem Drehmoment, die Zugfestigkeit des Materials ermittelt, oder es wird ein Drehmoment-Standzeitprofil ermittelt, das mit abgelegten Sollprofilen einer Drehmoment-Standzeit verglichen wird, und aus Abweichungen oberhalb einer vorgegebenen Toleranz wird auf ein falsches Material des Langprofils geschlossen.

Die Erfindung wird anhand von zwei Ausführungsbeispielen in drei Figuren beschrieben, dabei zeigen:
- Fig. 1: eine schematische Ansicht eines Rohrabschnitts, der von einer rotierenden Sägescheibe zerspant wird, und eines während des Zerspanvorganges erzeugten Vorschub-/Sägekraftprofils,
- Fig.2: eine graphische Darstellung eines Drehmoments der Sägescheibe in Abhängigkeit von dessen Standzeit bei einer vorgegebenen gleichen Eingriffslänge, bei drei Materialien mit verschiedenen Zugfestigkeiten,
- Fig. 3: eine schematische Ansicht entsprechend Fig. 1 mit drei gestapelten Rohrabschnitten.

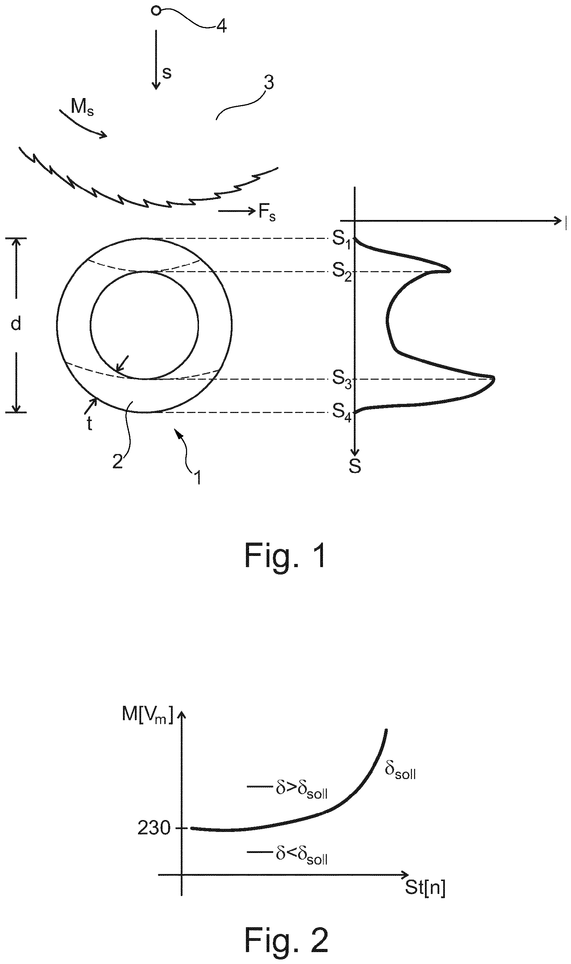

Fig. 1 zeigt schematisch eine Aufnahme 1 eines in die Rohrschneidemaschine eingelegten Rohres 2, von dem ein Rohrabschnitt 5 mittels einer rotierenden Sägescheibe 3 abgetrennt werden soll. Das Rohr ist hier ein Metallrohr, das nur aus dem Metall besteht. Die Sägescheibe 3 rotiert in Fig. 1 entgegen dem Uhrzeigersinn. Die Drehrichtung ist durch einen gekrümmten Pfeil dargestellt. Die Sägescheibe 3 ist nicht vollständig, sondern nur in einem Segment um eine Sägeblattwelle 4 dargestellt. Während des Sägevorganges wird das Rohr 2 entlang einer senkrecht zu einer Längsrichtung L der Rohres 2 angeordneten Sägefläche zerspant. Die Sägescheibe 3 wird entlang eines Vorschubweges s zum Rohr bewegt. Dabei ist der Vorschubweg s der Sägeblattwelle 4 auf eine Längsachse des Rohres 2 ausgerichtet. In Fig.1 wird die Sägescheibe 3 von oben nach unten vorgeschoben,

Während des Sägevorganges werden ein an der Sägeblattwelle 4 wirkendes Drehmoment Mₛ oder eine an der Schnittfläche wirkende Sägekraft Fs gemessen. Der Sägevorgang erfolgt mittels einer CNC-Steuerung der Rohrschneidemaschine, so dass die Position der Sägeblattwelle 4 relativ zur Aufnahme 1 des Rohres fortlaufend bestimmbar ist und Vorschubpositionsdaten entlang des Vorschubweges s ermittelt werden. In Fig. 1 werden die Vorschubpositionsdaten der Sägeblattwelle 4 bestimmt sowie die Sägekraft Fₛ ermittelt und gespeichert. Sie sind graphisch und in einem Vorschub-/Sägekraftprofil in Fig. 1 dargestellt.

Das Vorschub-Sägekraftprofil ist in Fig.1 rechts neben einem Querschnitt des Rohres 2 eingezeichnet. Die zu bestimmten Vorschubpositionsdaten ermittelten Sägekraftmessdaten können für eng benachbarte Vorschubpositionsdaten gemessen werden. Die ermittelten Vorschub-Sägekraftmessdaten können über gängige Interpolationsverfahren zu einer stetigen Kurve gemäß Fig. 1 verbunden werden.

In Fig. 1 ist ein auf diese Weise ermitteltes Istprofil dargestellt. Das Istprofil wird ausgewertet.

Das Istprofil der Fig. 1 zeigt unmittelbar zu Beginn des Zerspanvorganges des Verfahrens ein Ansteigen der Sägekraft Fs ausgehend von einem Nullwert. Die Sägekraft Fs steigt solange an, bis eine maximale Eingriffslänge, die durch eine obere gestrichelte Linie entlang des Querschnitts des Rohres 2 dargestellt ist, der Sägescheibe 3 in das Rohr 2 erreicht ist. Unter der Eingriffslänge wird hier eine Länge einer Schnittlinie der Sägescheibe 3 in einer durch den Zerspanvorgang erzeugten Sägenut verstanden.

Ab einem ersten Maximalwert der Eingriffslänge nimmt die Sägekraft Fₛ mit zunehmendem Vorschubweg s zunächst aufgrund der abnehmenden Eingriffslänge ab, um dann wieder bis auf einen zweiten Maximalwert anzusteigen, der sogar oberhalb des ersten Maximalwertes liegt. Die zweite maximale Eingriffslänge ist in Fig. 1 durch eine zweite unter der ersten Linie angeordnete gestrichelte Linie dargestellt. Der zweite Maximalwert liegt höher als der erste Maximalwert, weil die zweite maximale Eingriffslänge entlang der zweiten gestrichelten Linie länger ist als die erste eingezeichnete Eingriffslänge.

Bei weiterem Vorschub der Sägescheibe 3 nimmt die Sägekraft Fₛ wiederum ab, um nach dem vollständigen Durchsägen am Ende des Zerspanvorganges des Rohres 3 auf einen Nullwert abzufallen.

Aus der Differenzbildung von Vorschubpositionsdaten des Beginns des Zerspanvorganges s₁ und Vorschubpositionsdaten des ersten Maximalwertes s₂ kann durch Differenzbildung t=s₂-s₁ auf eine Wandstärke t des Rohres 2 geschlossen werden. Des Weiteren kann durch Differenzbildung t=s₄-s₃ von Vorschubpositionsdaten des zweiten Maximalwertes s₃ und Vorschubpositionsdaten des Endes des Zerspanvorganges s₄ ebenfalls auf die Wandstärke t des Rohres 2 geschlossen werden.

Durch Differenzbildung d=s₄-s₁ wird aus den Vorschubpositionsdaten des Endes des Zerspanvorganges s₄ und denen des Beginns des Zerspanvorganges s₁ auf einen Durchmesser d des Rohres geschlossen. Das in Fig. 1 ermittelte Vorschub-/Sägekraftprofil ermöglicht es daher, Durchmesser d und Wandstärke t des Rohres 2 in Fig. 1 zu ermitteln.

Die in Fig. 1 nicht dargestellte Rohrschneidemaschine kann eine Datenbank mit in ihr abgelegten verschiedenen Arten von Sollprofilen aufweisen, die Rohren verschiedener Durchmesser und verschiedener Wandstärke zugeordnet sind. Vor Beginn des Sägevorganges werden Durchmesser und Wandstärke des zu bearbeitenden Rohres 2 eingegeben, und das zugehörige Sollprofil wird in der Datenbank ermittelt. Das Sollprofil wird nach dem oder während des Zerspanvorgangs des Rohres 2 mit dem ermittelten Istprofil in Fig. 1 verglichen, und bei Abweichungen, die oberhalb einer vorgegebenen Toleranz liegen, wird ein Warnsignal abgegeben, so dass das Bedienpersonal erkennt, dass ein Rohr mit falschem Durchmesser d und/oder falscher Wandstärke t in die Rohrschneidemaschine eingelegt ist, von dem ein Rohrabschnitt abgetrennt wurde.
Entscheidend ist das Profil der Kennlinie, das gleichsam als Fingerabdruck des Rohres dient. Das Profil der Istkennlinie wird mit dem Profil der Sollkennlinie verglichen. Bei Abweichungen oberhalb einer Toleranz wird ein Signal abgegeben.

Die Toleranz ist so gewählt, dass Fertigungsungenauigkeiten der Rohre 2 eines Typs nicht erfasst werden, aber Maßunterschiede zwischen den Typen der Rohre. Unter einem Rohrtyp ist die Menge an Rohren zu verstehen, die einen bis auf Fertigungsungenauigkeiten gleichen Durchmesser d und gleiche Wandstärke t und gleiches Material aufweisen.

Die Rohrdurchmesser d verschiedener Typen von Rohren 2 wie auch die Wandstärken t liegen so dicht beieinander, dass sie mit bloßem Auge nicht zu erkennen sind. Mit dem Kontrollverfahren kann nachträglich festgestellt werden, ob ein falscher Rohrtyp eingelegt wurde.

In einem weiteren Aspekt kann zusätzlich oder anstatt zu dem in Fig. 1 ermittelten Profil ein Drehmoment-Standzeit-Profil gemäß Fig. 2 ermittelt werden. Unter Standzeit St wird hier die Anzahl an von der Sägescheibe 3 getätigten Sägevorgängen bezeichnet. Üblicherweise ist das Drehmoment Mₛ bei einer neuen Sägescheibe 3 mit scharfen Zähnen während der ersten Schnittvorgänge im Wesentlichen konstant. Im vorliegenden Fall beträgt das Drehmoment Mₛ etwa 230 Nm. Mit einer zunehmenden Standzeit St wird die Sägescheibe 3 zunehmend stumpf und baut ab einer bestimmten Standzeit St progressiv ab.

Das zum Sägevorgang aufzuwendende Drehmoment Mₛ hängt zum einen von der Schärfe der Zähne, zum anderen aber auch von der Materialbeschaffenheit des Rohres 2 ab. Insbesondere weisen verschiedene Stahlarten in ihren verschiedenen Legierungen unterschiedliche Zugfestigkeiten σ auf, die unterschiedliche Drehmomente Mₛ beim Sägevorgang erforderlich machen. Zugfestigkeit und Zerspanbarkeit werden hier synonym verwendet. Wenn die Zugfestigkeit σ oberhalb einer Sollzugfestigkeit σₛₒₗₗ liegt, ist das aufzuwendende Drehmoment Mₛ gemäß Fig. 2 deutlich höher bei der gleichen Eingriffslänge, während bei weniger zugfesten Materialien das Drehmoment Mₛ, das für den Zerspanvorgang aufgewendet werden muss, geringer ist. Das Verfahren ermöglicht auch die Eingabe der Art des Materials aus dem das Rohr 2 besteht in die Steuerung der Rohrschneidemaschine. Aus der Abweichung, die wiederum oberhalb der entsprechenden Fertigungstoleranzen liegt, der Istkurve von der Sollkurve in Fig. 2 kann darauf geschlossen werden, dass ein Rohr mit falschem Material gewählt wurde. In Fig. 2 zeigt die Kennlinie einen Sprung bei Änderung der Zugfestigkeit σ von σ < σ _{Soll} auf σ > σ _{Soll}. Ein Vergleich in der Datenbank ist für bestimmte Materialien und in Verbindung mit dem
Rohrdurchmesser und der Wandstärke Standzeitprofile gemäß Fig. 2 abgelegt. Die verschiedenen Sollprofile sind ebenfalls in der Datenbank abgelegt.

Wenn das ermittelte Istprofil vom Sollprofil um mehr als die vorgegebene Toleranz abweicht, wird ebenfalls ein Warnsignal ausgegeben, das dem bedienenden Personal anzeigt, dass ein Rohr 2 mit einem falschen Material in die Rohrschneidemaschine eingelegt wurde.

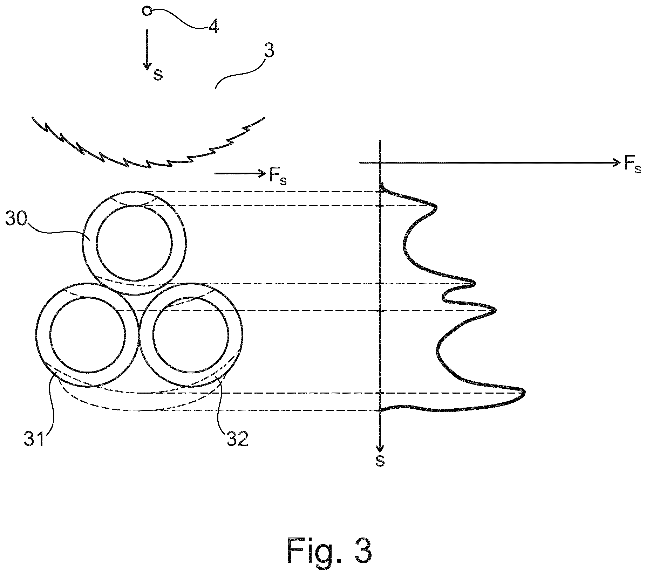

Fig. 3 zeigt die Anordnung der Fig. 1 mit drei gestapelten Rohren 30, 31, 32, von denen gleichzeitig jeweils ein Rohrabschnitt 5 abgesägt wird. Das zugehörige Vorschub-Sägekraftprofil ist in Fig. 3 rechts unten eingezeichnet. Aus dem Profil kann in entsprechender Weise wie in Fig. 1 auf den Durchmesser d und die Wandstärke t der Rohre 30, 31, 32 geschlossen werden.

### Bezugszeichenliste

- 1: Aufnahme
- 2: Rohr
- 3: Sägescheibe
- 4: Sägeblattwelle
- 5: Rohrabschnitt

- 30: Rohr gestapelt
- 31: Rohr gestapelt
- 32: Rohr gestapelt

- L:
- Fₛ: Sägekraft
- Mₛ: Drehmoment
- St: Standzeit

- d: Durchmesser
- s: Vorschubweg
- s₁: Vorschubpositionsdaten Beginn des Zerspanvorganges
- s₂: Vorschubpositionsdaten des ersten Maximalwertes
- s₃: Vorschubpositionsdaten des zweiten Maximalwertes
- s₄: Vorschubpositionsdaten Ende des Zerspanvorganges

- t: Wandstärke

- σ: Zugfestigkeit
- σₛₒₗₗ: Sollzugfestigkeit

## Patentansprüche

1. Verfahren zur Bestimmung von Materialabmessungen eines Langprofils (2) während eines Sägevorganges, indem
eine Sägescheibe (3) vorgeschoben wird,
das Langprofil (2) währenddessen von der Sägescheibe (3) entlang einer Sägenut zerspant wird;
Vorschubpositionsdaten (s₁, s₂, s₃, s₄) der Sägescheibe (3) entlang des Vorschubweges (s) ermittelt werden,
während des Sägens weitere Messdaten aus der Gruppe Sägekraft (Fₛ) oder einer anderen mit der Sägekraft (Fₛ) korrespondierenden Größe (Mₛ) ermittelt werden, **dadurch gekennzeichnet, dass**
aus den Vorschubpositionsdaten (s₁, s₂, s₃, s₄) und den weiteren Messdaten (Fₛ, Mₛ) ein Istprofil ermittelt wird.

2. Verfahren nach Anspruch 1,
**dadurch gekennzeichnet, dass** aus dem Istprofil Materialabmessungen des Langprofils (2) ermittelt werden.

3. Verfahren nach Anspruch 1 oder 2,
**dadurch gekennzeichnet, dass** die Sägescheibe (3) rotiert wird und entlang des Vorschubweges (s) Vorschubpositionsdaten einer Sägescheibenwelle (4) gemessen werden.

4. Verfahren nach Anspruch 1, 2 oder 3,
**dadurch gekennzeichnet, dass** aus dem Istprofil Extremalwerte bestimmt werden und aus den Vorschubpositionsdaten (s₁, s₂, s₃, s₄) der Extremalwerte die Materialabmessungen ermittelt werden.

5. Verfahren nach Anspruch 4,
**dadurch gekennzeichnet, dass** aus der Differenz der Vorschubpositionsdaten (s₁, s₂, s₃, s₄) zweier benachbarter Extremalwerte Materialabmessungen eines Langprofilabschnitts bestimmt werden.

6. Verfahren nach Anspruch 5,
**dadurch gekennzeichnet, dass** eine Wandstärke (t) des Langprofils (2) aus der Differenz der Vorschubpositionsdaten des Beginns der Zerspanung (s₁) und der Vorschubpositionsdaten eines ersten Maximalwertes (s₂) bestimmt wird.

7. Verfahren nach Anspruch 5,
**dadurch gekennzeichnet, dass** aus der Differenz der Vorschubpositionsdaten des Endes der Zerspanung (s₄) und der Vorschubpositionsdaten des Beginns der Zerspanung (s₁) ein Durchmesser (d) des Langprofils (2) bestimmt wird.

8. Verfahren nach einem der vorstehenden Ansprüche,
**dadurch gekennzeichnet, dass** röhrenförmige Langprofilabschnitte mit einem kreisförmigen Innen- und einem kreisförmigen Außendurchmesser gewählt werden.

9. Verfahren nach einem der vorstehenden Ansprüche,
**dadurch gekennzeichnet, dass** das Istprofil mit einem Sollprofil verglichen wird und bei Abweichungen der beiden Profile voneinander oberhalb einer vorgegebenen Toleranz eine Fehlermeldung abgegeben wird.

10. Verfahren nach einem der vorstehenden Ansprüche,
**dadurch gekennzeichnet, dass** die Vorschubpositionsdaten des Beginns der Zerspanung (s₁) ermittelt werden und daraus ein Sägescheibendurchmesser ermittelt wird.

11. Verfahren nach einem der vorstehenden Ansprüche,
**dadurch gekennzeichnet, dass** aus einem Sprung in einer Mₛ-Kennlinie die Änderung einer Zugfestigkeit (σ) des Materials des Langprofils (2) ermittelt wird.

## Claims

1. A method for determining material dimensions of an elongate profile (2) during a sawing process, wherein
a saw disc (3) is fed forward,
the elongate profile (2) is, in the course of this, cut by the saw disc (3) along a saw groove;
feed position data (s₁, s₂, s₃, s₄) of the saw disc (3) are determined along the feed path (s),
during the sawing process, further measurement data from the group of sawing force (Fₛ) or another variable (Mₛ) that corresponds to the sawing force (Fₛ) are determined,
**characterised in that**
an actual profile is determined from the feed position data (s₁, s₂, s₃, s₄) and the further measurement data (Fₛ, Mₛ).

2. The method as claimed in claim 1,
**characterised in that** the material dimensions of the elongate profile (2) are determined from the actual profile.

3. The method as claimed in claim 1 or 2,
**characterised in that** the saw disc (3) is rotated and feed position data of a saw disc shaft (4) is measured along the feed path (s).

4. The method as claimed in claim 1, 2 or 3,
**characterised in that** extremal values are determined from the actual profile and the material dimensions are determined from the feed position data (s₁, s₂, s₃, s₄) of the extremal values.

5. The method as claimed in claim 4,
**characterised in that** material dimensions of an elongate profile section are determined from the difference between the feed position data (s₁, s₂, s₃, s₄) of two adjacent extremal values.

6. The method as claimed in claim 5,
**characterised in that** a wall thickness (t) of the elongate profile (2) is determined from the difference between the feed position data of the start of the cutting process (s₁) and the feed position data of a first maximum value (s₂).

7. The method as claimed in claim 5,
**characterised in that** a diameter (d) of the elongate profile (2) is determined from the difference between the feed position data of the end of the cutting process (s₄) and the feed position data of the start of the cutting process (s₁).

8. The method as claimed in any one of the preceding claims,
**characterised in that** tubular elongate profile sections with a circular inner and a circular outer diameter are selected.

9. The method as claimed in any one of the preceding claims,
**characterised in that** the actual profile is compared with a target profile, and in the case of deviations of the two profiles from each other above a specified tolerance, an error message is output.

10. The method as claimed in any one of the preceding claims,
**characterised in that** the feed position data of the start of the cutting process (s₁) is determined and a saw disc diameter is determined therefrom.

11. The method as claimed in any one of the preceding claims,
**characterised in that** from a jump in an Mₛ characteristic curve, the change in tensile strength (σ) of the material of the elongate profile (2) is determined.

## Revendications

1. Procédé pour déterminer des dimensions de matériaux d'un profilé longitudinal (2) pendant un processus de sciage en faisant avancer un disque tronçonneur (3), le profilé longitudinal (2) pendant se temps étant réduit en copeaux par le disque tronçonneur (3) le long d'une rainure de sciage, des données de position d'avancement (s₁, s₂, s₃, s₄) du disque tronçonneur (3) étant déterminées le long de la trajectoire d'avancement (s), d'autres données de mesure du groupe force de sciage (Fₛ) ou d'une autre grandeur (Mₛ) correspondant à la force de sciage (Fₛ) étant déterminées pendant le sciage,
**caractérisé en ce qu'**un profilé réel est déterminé à partir des données de position d'avancement (s₁, s₂, s₃, s₄) et des autres données de mesure (Fₛ, Mₛ).

2. Procédé selon la revendication 1, **caractérisé en ce que** des dimensions de matériaux du profilé longitudinal (2) sont déterminées à partir du profilé réel.

3. Procédé selon la revendication 1 ou 2, **caractérisé en ce que** le disque de tronçonnement (3) est en rotation et des données de position d'avancement d'un arbre de disque de tronçonnement (4) sont mesurées le long de la trajectoire d'avancement (s).

4. Procédé selon la revendication 1, 2 ou 3, **caractérisé en ce que** des valeurs extrêmes sont déterminées à partir du profilé réel et les dimensions de matériaux sont déterminées à partir des données de position d'avancement (s₁, s₂, s₃, s₄) des valeurs extrêmes.

5. Procédé selon la revendication 4, **caractérisé en ce que** des dimensions de matériaux d'une section de profilé longitudinal sont déterminées à partir de la différence des données de position d'avancement (s₁, s₂, s₃, s₄) de deux valeurs extrêmes voisines.

6. Procédé selon la revendication 5, **caractérisé en ce qu'**une épaisseur de paroi (t) du profilé longitudinal (2) est déterminée à partir de la différence des données de position d'avancement du début du découpage en copeaux (s₁) et des données de position d'avancement d'une première valeur maximale (s₂).

7. Procédé selon la revendication 5, **caractérisé en ce qu'**un diamètre (d) du profilé longitudinal (2) est déterminé à partir de la différence des données de position d'avancement de la fin du découpage en copeaux (s₄) et des données de position d'avancement du début du découpage en copeaux (s₁).

8. Procédé selon l'une des revendications précédentes, **caractérisé en ce que** des sections de profilé long tubulaires sont sélectionnées avec un diamètre intérieur circulaire et un diamètre extérieur circulaire.

9. Procédé selon l'une des revendications précédentes, **caractérisé en ce que** le profilé réel est comparé avec un profilé nominal et qu'un message d'erreur est délivré lors d'écarts des deux profilés l'un par rapport à l'autre au-dessus d'une tolérance prédéterminée.

10. Procédé selon l'une des revendications précédentes, **caractérisé en ce que** les données de position d'avancement du début du découpage en copeaux (s₁) sont déterminées et qu'un diamètre de disque de tronçonnement est déterminé à partir de celles-ci.

11. Procédé selon l'une des revendications précédentes, **caractérisé en ce que** le changement d'une résistance à la traction (σ) du matériau du profilé longitudinal (2) est déterminé à partir d'un saut dans une courbe caractéristique Mₛ.
